# EUROPEAN PATENT APPLICATION

(11) **EP 4 700 942 A1**
(43) Date of publication of application: **25.02.2026**
(21) Application number: 23849140.1
(22) Date of filing: 30.06.2023
(51) Int. Cl.: H01M 50/244, H01M 50/224, H01M 50/233, H01M 50/249

(54) **BATTERY MODULE FIXING END PLATE AND BATTERY MODULE**

(30) Priority: 24.04.2023 CN 202310447917; 24.04.2023 CN 202320944116 U
(71) Applicant: Eve Energy Storage Co., Ltd, Wuhan, Hubei 430000 (CN)
(72) Inventor: ZHUO, Wei, Jingmen, Hubei 430000 (CN); YI, Haohao, Jingmen, Hubei 430000 (CN)
(74) Representative: Cabinet Beaumont
(86) International application number: PCT/CN2023/105194
(87) International publication number: WO 2024/027430

(57) **Abstract**

Provided are an end plate for fixing a battery module and a battery module. The end plate for fixing the battery module includes an end plate body. Fixing structures are disposed at two ends of the end plate body. Reinforcing structures are disposed on one side of the end plate body. The reinforcing structures include multiple reinforcing grooves along the Z direction. The reinforcing grooves are arranged in an array along an X direction and a Y direction. At least one accommodation groove is disposed along the Y direction in the middle of the end plate body on the side where the reinforcing structures are located. Coaxial through holes are disposed on groove walls at two opposite ends of the at least one accommodation groove along the Y direction to allow insertion of a reinforcing rod. The reinforcing structures are adjacently disposed on two sides of the at least one accommodation groove. The battery module includes the end plate for fixing the battery module to enhance the supporting strength of the middle of the end plate body, thereby reducing the likelihood of deformation or even fracture in the middle of the end plate body and reducing the risk of damage to the end plate body.

## Description

This application claims priority to Chinese Patent Application No. 202310447917.5 filed with the China National Intellectual Property Administration (CNIPA) on Apr. 24, 2023 and Chinese Patent Application No. 202320944116.5 filed with the CNIPA on Apr. 24, 2023, the disclosures of which are incorporated herein by reference in their entireties.

### TECHNICAL FIELD

The present application relates to the field of battery technology, for example, an end plate for fixing a battery module and a battery module.

### BACKGROUND

A power battery is a power supply that provides an energy source for tools. A power battery generally refers to a storage battery for supplying power to electric vehicles, electric trains, electric bicycles, and golf carts. A battery module is a structure in which batteries are stacked for ease of fixation and transportation. In general, the batteries are placed on a base plate and then fixed by end plates on the sides.

In a current end plate structure, the end plate body is formed with a honeycomb structure along its thickness direction, thereby enhancing the structural strength of the end plate, reducing the weight of the end plate, and improving the structural stability. Fixing holes of the end plate are disposed on the left side and the right side of the end plate body. However, with such a current end plate, when the battery module is fixed, it is required to apply force through the fixing holes on the left side and the right side of the end plate. At this time, however, the internal battery pack abuts the end plate from the inside toward the outside. As a result, the middle of the end plate is prone to deformation or even fracture, causing damage to the end plate and rendering the batteries unable to be stably fixed.

### SUMMARY

The present application provides an end plate for fixing a battery module to enhance the supporting strength of the middle of the end plate and reduce the risk of damage to the end plate.

According to a first aspect, embodiments of the present application provide an end plate for fixing a battery module. The end plate for fixing the battery module includes an end plate body. Reinforcing structures are disposed on one side of the end plate body. The reinforcing structures include multiple reinforcing grooves whose depth direction is the Z direction. The reinforcing grooves are arranged in an array along the X direction and the Y direction. Fixing structures are disposed at two ends of the end plate body. At least one accommodation groove is disposed along the Y direction in the middle of the end plate body on the side where the reinforcing structures are located. Coaxial through holes are disposed on groove walls at two opposite ends of the at least one accommodation groove along the Y direction to allow insertion of a reinforcing rod. The reinforcing structures are adjacently disposed on two sides of the at least one accommodation groove.

In an embodiment, the at least one accommodation groove is provided with multiple U-shaped first reinforcing ribs fixed on two side walls of the at least one accommodation groove and the end plate body to support the reinforcing rod.

In an embodiment, multiple intersecting second reinforcing ribs are disposed in reinforcing grooves adjacent to the at least one accommodation groove. For each second reinforcing rib, an end of the second reinforcing rib is connected to an intersection between groove walls of a corresponding reinforcing groove.

In an embodiment, through holes on at least one side are threaded holes, and the reinforcing rod is a long threaded rod.

In an embodiment, along the Y direction, at least two reinforcing grooves are each provided with a third reinforcing rib. The at least two reinforcing grooves are symmetrically disposed on two sides of the at least one accommodation groove. Two third reinforcing ribs form a T-shaped structure in the at least two reinforcing grooves.

In an embodiment, along the X direction, at least two reinforcing grooves are each provided with a third reinforcing rib.

In an embodiment, the end plate for fixing the battery module also includes a first notch. The first notch is disposed at one end of a corresponding through hole.

In an embodiment, the fixing structures include two first fixing holes disposed on two sides of the end plate body away from the at least one accommodation groove. Each first fixing hole penetrates the end plate body along the Y direction. Fracture grooves are disposed on two sides of the end plate body. Each fracture groove splits a corresponding first fixing hole into two sections.

In an embodiment, the end plate for fixing the battery module also includes a second notch. The second notch is disposed at one end of a corresponding fixing hole.

In an embodiment, the end plate for fixing the battery module also includes multiple second fixing holes. Each second fixing hole is disposed on the side wall of the end plate body away from the at least one accommodation groove.

In an embodiment, limiting assemblies are disposed on two sides of the end plate body. Each limiting assembly is configured to limit a binding strap.

In an embodiment, the limiting assembly includes, on two sides of the end plate body away from the at least one accommodation groove, two limiting protrusions spaced apart along the Y direction or a limiting groove.

In an embodiment, the limiting protrusions or the limiting groove are provided with inclined guide surfaces.

Opposite surfaces of the two limiting protrusions are configured such that inclined guide surfaces of the two limiting protrusions face each other to form a limiting space between the two limiting protrusions to limit the binding strap; or opposite groove walls of the limiting groove along the Y direction are configured as inclined guide surfaces to form a limiting space between the limiting groove to limit the binding strap.

In an embodiment, the end plate for fixing the battery module also includes a fixing groove group. The fixing groove group is disposed on any side of an end of the at least one accommodation groove. The fixing groove group is located on one side of the reinforcing structures. The fixing groove group includes at least one of the following: a first fixing groove, a second fixing groove, or a third fixing groove. The first fixing groove is configured to fix a Cells Contact System (CCS) assembly. The second fixing groove is configured to fix an insulating block. The third fixing groove is configured to fix a wire harness.

In an embodiment, limiting guide grooves are disposed on opposite inner walls of the second fixing groove to engage with protrusions on the insulating block to implement insertion.

In an embodiment, a wire passing hole is disposed on the groove wall of the third fixing groove. The wire passing hole is configured such that an external wire harness can pass through the wire passing hole and be gathered in the third fixing groove to bind.

In an embodiment, the end plate body is made of aluminum.

According to a second aspect, embodiments of the present application provide a battery module. The battery module includes the end plate for fixing the battery module, a PC insulating sheet, a battery module aluminum busbar positive electrode, an end plate positioning block, a connecting busbar, and a battery cell.

The present application has the following beneficial effects:
The accommodation grooves and the through holes are disposed on the end plate body so that reinforcing rods can be inserted into the accommodation grooves so that when the oppositely arranged end plate bodies are fixed by fixing structures, the reinforcing rods in the middle can abut the middle of the end plate body. This enhances the supporting strength of the middle of the end plate body on opposite sides of the batteries, thereby reducing the likelihood of deformation or even fracture in the middle of the end plate body and reducing the risk of damage to the end plate body.

### BRIEF DESCRIPTION OF THE DRAWINGS

FIG. 1 is a structure view of an end plate for fixing a battery module according to the present application.
FIG. 2 is a front view of the side of an end plate for fixing a battery module showing accommodation grooves according to the present application.
FIG. 3 is a side view of the side of an end plate for fixing a battery module showing a first fixing groove according to the present application.
FIG. 4 is a side view of the side of an end plate for fixing a battery module showing a second fixing groove according to the present application.
FIG. 5 is a structure view of a battery module according to the present application.

Reference list
1. end plate body; 2. reinforcing groove; 3. accommodation groove; 4. through hole; 5. first reinforcing rib; 6. second reinforcing rib; 7. third reinforcing rib; 8. first fixing hole; 9. fracture groove; 10. second fixing hole; 11. limiting protrusion; 12. first fixing groove; 13. second fixing groove; 14. third fixing groove; 15. wire passing hole; 16. limiting guide groove; 17. first notch; 18. second notch; 19. PC insulating sheet; 20. battery module aluminum busbar positive electrode; 21. end plate positioning block; 22. end plate insulating plate; 23. connecting busbar; 24. insulating steel strip; 25. battery cell; 26. stud; 27. silicone foam

### DETAILED DESCRIPTION

In the description of the present application, the terms "joined", "connected", and "fixed" are to be understood in a broad sense unless otherwise expressly specified and limited. For example, the term "connected" may refer to "fixedly connected", "detachably connected", or "integrated", may refer to "mechanically connected" or "electrically connected", may refer to "connected directly" or "connected indirectly through an intermediary", or may refer to "connected inside two elements" or "an interaction relation between two elements". For those of ordinary skill in the art, specific meanings of the preceding terms in the present application may be understood based on specific situations.

In the present application, unless otherwise expressly specified and limited, when a first feature is described as being "on" or "below" a second feature, the first feature and the second feature may be in direct contact or be in contact via another feature between the two features instead of being in direct contact. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below", or "underneath" the second feature, the first feature is right under, below, or underneath the second feature, the first feature is obliquely under, below, or underneath the second feature, or the first feature is simply at a lower level than the second feature.

In the description of this embodiment, orientations or position relations indicated by terms such as "upper", "lower", "left", and "right" are based on the drawings. These orientations or position relations are intended only to facilitate description and simplify operation and not to indicate or imply that a device or element referred to must have such particular orientations or must be configured or operated in such particular orientations. Thus, these orientations or position relations are not to be construed as limiting the present application. Additionally, terms "first" and "second" are used for distinguishing between descriptions and have no special meanings.

In the related art, batteries are stacked in a battery module and then clamped by oppositely arranged end plates. When the end plates are fixed, generally the end plates are connected by connectors at two ends of the end plates, so pulling forces pull the end plates from the two ends to the batteries clamped in the two end plates, and the batteries abut the end plates along an opposite direction, easily causing deformation or even fracture in the middle of the end plates.

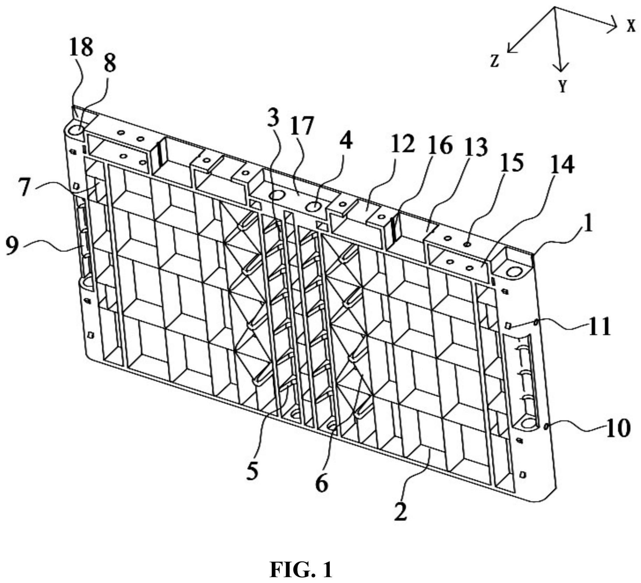

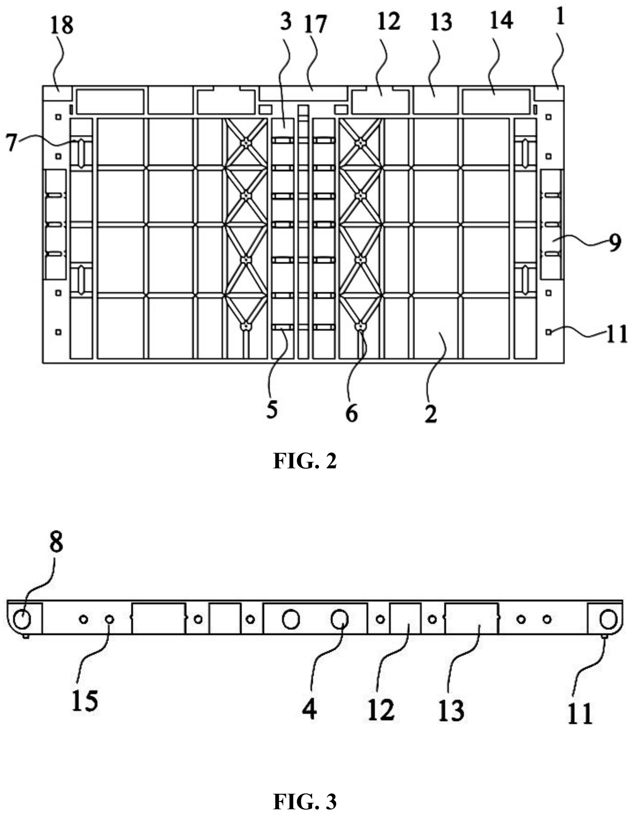

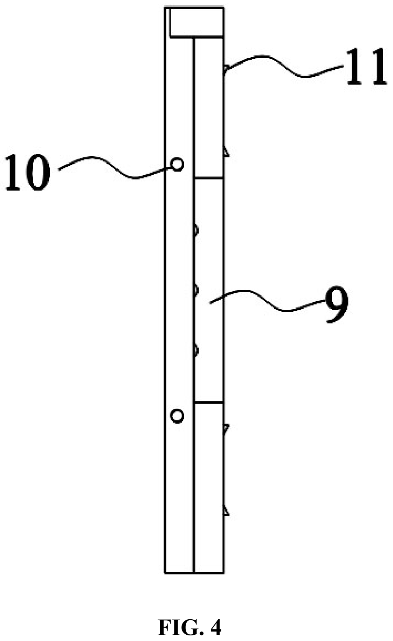

Accordingly, as shown in FIGS. 1 to 4, an embodiment provides an end plate for fixing a battery module. The end plate for fixing the battery module includes an end plate body 1. Fixing structures are disposed at two ends of the end plate body 1. Reinforcing structures are disposed on one side of the end plate body 1. The reinforcing structures include multiple reinforcing grooves 2 along the Z direction. The reinforcing grooves 2 are arranged in an array along the X direction and the Y direction. It is to be noted that as shown in FIG. 1, the X direction is the length direction of the end plate body 1, the Y direction is the width direction of the end plate body 1, and the Z direction is the thickness direction of the end plate body 1. At least one accommodation groove 3 is disposed along the Y direction in the middle of the end plate body 1 on the side where the reinforcing structures are located. Coaxial through holes 4 are disposed on groove walls at two opposite ends of the at least one accommodation groove 3 along the Y direction to allow insertion of a reinforcing rod. The reinforcing structures are adjacently disposed on two sides of the at least one accommodation groove 3.

Accommodation grooves 3 and through holes 4 are disposed on the end plate body 1 so that reinforcing rods can be inserted into the accommodation grooves 3 so that when the oppositely arranged end plate bodies 1 are fixed by fixing structures, this arrangement enhances the supporting strength of the middle of the end plate body 1 on opposite sides of the batteries, thereby enhancing the structural strength in the middle, reducing the likelihood of deformation or even fracture in the middle of the end plate body 1, and reducing the risk of damage to the end plate body 1.

The following describes this embodiment in detail. As shown in FIGS. 1 to 4, the end plate for fixing the battery module includes an end plate body 1. The material of the end plate body 1 may be, but is not limited to, aluminum. Using aluminum reduces the production cost of the end plate and facilitates mass production of the end plate. After formation, the end plate body 1 may undergo passivation treatment to slow down the corrosion rate. The end plate body 1 is generally rectangular. Reinforcing structures are disposed on one side of the end plate body 1, for example, disposed on the side of the end plate body 1 facing away from the batteries fixed by the end plate body 1. The reinforcing structures include reinforcing grooves 2 whose depth direction is the Z direction. The reinforcing grooves 2 are arranged in an array along the X direction and the Y direction, thereby forming a horizontal and vertical array of reinforcing grooves 2 on one side of the end plate body 1. The side walls of the reinforcing grooves 2 serve as horizontal and vertical reinforcing ribs to enhance the structural strength of the end plate body 1. It is to be understood that the reinforcing structures in this embodiment may also be a honeycomb structure. To make the structures more stable, the reinforcing structures are integrally formed with the end plate body 1. To reinforce the middle of the end plate body 1, at least one accommodation groove 3 is disposed along the Y direction in the middle of the end plate body 1 on the side where the reinforcing structures are located. Coaxial through holes 4 are disposed on groove walls at two opposite ends of the at least one accommodation groove 3 along the Y direction to allow insertion of a reinforcing rod into the accommodation groove 3 to enhance the supporting strength of the middle of the end plate body 1. By way of example, a through hole 4 on at least one side is a threaded hole, the reinforcing rod is a long threaded rod, and the threaded hole can fix the long threaded rod. By way of example, the end plate body 1 is also provided with a first notch 17. The first notch 17 is disposed at one end of a corresponding through hole 4. When the reinforcing rod is a long threaded rod, the first notch 17 can accommodate an end of the long threaded rod to prevent the long threaded rod from protruding from the end plate body 1. In addition, the first notch 17 can also leave an operation space for inserting and removing the reinforcing rod. The reinforcing structures are adjacently arranged on two sides of the accommodation groove 3 so that the structural strength of the end plate body 1 on two sides of the accommodation groove 3 is enhanced. In this embodiment, two accommodation grooves 3 are provided, and the two accommodation grooves 3 are adjacently arranged. In other embodiments, the number of accommodation grooves 3 may be set according to the length, thickness, and other parameters of the end plate body 1.

Multiple U-shaped first reinforcing ribs 5 spaced apart along the Y direction are disposed in the accommodation groove 3. The opening of the U-shaped first reinforcing rib 5 is the same as the opening of the accommodation groove 3. The U-shaped first reinforcing rib 5 is fixed on two side walls of the accommodation groove 3 and the end plate body 1 so that on the one hand, the reinforcing rod can be placed in the recess of the U-shaped first reinforcing rib 5 and thus be supported firmly; on the other hand, the first reinforcing rib 5 can further increase the strength of the side wall of the accommodation groove 3. Multiple intersecting second reinforcing ribs 6 are disposed in reinforcing grooves 2 adjacent to the at least one accommodation groove 3. For each second reinforcing rib 6, an end of the second reinforcing rib 6 is connected to an intersection between groove walls of a corresponding reinforcing groove 2. This arrangement further enhances the strength of the side wall of the accommodation groove 3 and the strength of the end plate body 1 on two sides of the accommodation groove 3. From the middle of the end plate body 1 to the two sides of the end plate body 1, a combination of the first reinforcing ribs 5 and the reinforcing rods, a combination of the accommodation grooves 3 and the second reinforcing ribs 6, and a combination of the accommodation grooves 3 are arranged in sequence so that a stepped structure is formed from the middle of the end plate body 1 to the two sides of the end plate body 1. Thus, when the oppositely arranged end plate bodies 1 are fixed, different support strengths can be provided for stresses generated at different parts of each end plate body 1. Moreover, the groove structures can also reduce the weight of the end plate body 1 while providing sufficient support strength.

In the related art, for the convenience of hoisting, generally holes or grooves for hoisting are disposed on the end plate body 1. In this embodiment, reinforcing grooves 2 are used. It is to be noted that hoisting is basic common knowledge in the field, and thus its principle is not described here. In this embodiment, to enhance the strength during hoisting, at least two reinforcing grooves 2 along the Y direction are provided with third reinforcing ribs 7. The reinforcing grooves 2 provided with third reinforcing ribs 7 are symmetrically arranged on two sides of the accommodation grooves 3 so that the forces applied on the two sides during hoisting are balanced and symmetrical, thereby avoiding tilting during hoisting. In this embodiment, the reinforcing grooves 2 provided with third reinforcing ribs 7 are generally the outermost reinforcing grooves 2. Since there are multiple reinforcing grooves 2, multiple hoisting points may be arranged. Accordingly, third reinforcing ribs 7 may be disposed in at least two reinforcing grooves 2 along the X direction, thereby increasing the number of hoisting points along the X direction. In this embodiment, in each of the at least two reinforcing grooves 2, the third reinforcing ribs 7 form a T-shaped structure. The end of the third reinforcing rib 7 is connected to the groove wall of the reinforcing groove 2 to enhance the structural strength of the groove wall of the reinforcing groove 2 during hoisting.

In this embodiment, two ends of the end plate body 1 along the X direction are provided with fixing structures. The oppositely arranged end plate bodies 1 are fixed by the fixing structures. By way of example, the fixing structures include two first fixing holes 8 disposed on two sides of the end plate body 1 away from the accommodation grooves 3. Each first fixing hole 8 penetrates the end plate body 1 along the Y direction so that a connecting rod can be inserted into the first fixing hole 8. By use of the connecting rod in cooperation with the external connector, the oppositely arranged end plate bodies 1 clamp the batteries so that a battery module is formed. By way of example, the end plate body 1 is also provided with second notches 18. The second notch 18 is disposed at one end of the first fixing hole 8. When the connecting rod is a long threaded rod, the second notch 18 can accommodate the end of the long threaded rod to prevent the long threaded rod from protruding from the end plate body 1. In addition, the second notch 18 can also leave an operation space for inserting and removing the connecting rod. A fracture groove 9 is disposed on each of the two sides of the end plate body 1 along the X direction to split the corresponding first fixing hole 8 into two sections. By way of example, the fracture groove 9 is disposed in the middle of the first fixing hole 8. This structure can facilitate the formation of the first fixing hole 8 and avoid the use of a long through hole that may cause damage to the end plate body 1 when the first fixing hole 8 is formed. To improve the compatibility of the end plate body 1 during fixing, multiple second fixing holes 10 are disposed on the side walls of the end plate body 1 away from the accommodation grooves 3. The oppositely arranged end plate bodies 1 can be fixed from the two sides through insertion of connectors into the second fixing holes 10, thereby enriching the fixing form of the end plate body 1 and improving the compatibility of the end plate body 1. Generally, when the oppositely arranged end plate bodies 1 are fixed, a binding strap, generally a steel strap, is used. To prevent the binding strap from moving during binding, the two sides of the end plate body 1 away from the accommodation grooves 3 are also provided with limiting assemblies. The limiting assemblies are configured to limit the binding strap. By way of example, the limiting assembly includes, on each of two sides of the end plate body 1 away from the at least one accommodation groove 3, either two limiting protrusions 11 spaced apart along the Y direction or a limiting groove. In this embodiment, limiting protrusions 11 are used. It is to be noted that the number of limiting assemblies is not limited. In this embodiment, multiple limiting assemblies are provided. The limiting assemblies are disposed on two sides of the fracture grooves 9 so that the end plate body 1 can be bound at two ends along the Y direction, making the binding more stable. By way of example, opposite surfaces of the two limiting protrusions 11 are configured such that inclined guide surfaces of the two limiting protrusions 11 face each other to form a limiting space between the two limiting protrusions 11 to limit the binding strap. In other embodiments, the limiting assemblies are limiting grooves. The limiting grooves may be disposed on two sides of the fracture grooves 9. Moreover, opposite groove walls of the limiting groove along the Y direction are configured as inclined guide surfaces to form a limiting space between the limiting groove to limit the binding strap. By way of example, to make the strap straight, the limiting assemblies located on two sides of the accommodation grooves 3 are symmetrical with respect to the accommodation grooves 3. By way of example, to prevent the edges and corners of the end plate body 1 from wearing the strap when being bound, the ends of the two sides of the end plate body 1 away from the accommodation grooves 3 are rounded, thereby allowing the binding strap to transition smoothly at the corners.

The end plate for fixing the battery module also includes a fixing groove group. The fixing groove group is disposed on the end plate body 1 and located on any side of an end of the accommodation groove 3. The fixing groove group is disposed on one side of the reinforcing structures. The number of fixing groove groups is not limited and can be designed in the early stage according to usage requirements. In this embodiment, two fixing groove groups are arranged symmetrically on two sides of the accommodation grooves 3. The fixing groove group includes a first fixing groove 12, a second fixing groove 13, and/or a third fixing groove 14. The first fixing groove 12 is configured to fix a CCS assembly. The second fixing groove 13 is configured to fix an insulating block. The third fixing groove 14 is configured to fix a wire harness. This can be designed in the early stage according to usage requirements. In this embodiment, the fixing groove group includes a first fixing groove 12 configured to fix a CCS assembly. The CCS assembly is a concept in the related art and thus is not described here. The fixing groove group also includes a third fixing groove 14 spaced apart from the first fixing groove 12 and configured to fix a wire harness. The groove wall of the third fixing groove 14 is provided with a wire passing hole 15. The external wire harness can pass through the wire passing hole 15 and be gathered in the third fixing groove 14 so as to be bound so that the wire harness is more orderly and the compatibility of the end plate body 1 is improved. The fixing groove group also includes a second fixing groove 13. The second fixing groove 13 is configured to fix an insulating block for isolating and insulating the battery module from an external component, thereby improving the safety compatibility. In this embodiment, the second fixing groove 13 is disposed between the first fixing groove 12 and the third fixing groove 14 and is formed by being enclosed by groove walls of the first fixing groove 12 and the third fixing groove 14, thereby reducing the processing steps. To facilitate the fixing of the insulating block, limiting guide grooves 16 are disposed on the opposite inner walls of each second fixing groove 13. In this embodiment, the outer walls of the first fixing groove 12 and the third fixing groove 14 that are opposite to each other are provided with limiting guide grooves 16 to engage with protrusions disposed on the insulating block to implement insertion, thereby facilitating mounting and making the insulating block stably limited and prevented from being separated from the second fixing groove 13. It is to be noted that this structure is one form of the fixing groove group. In other embodiments, the first fixing groove 12, the second fixing groove 13, and the third fixing groove 14 may be independent of each other according to the design requirements.

An embodiment provides a battery module. The battery module includes the end plate for fixing the battery module. Two end plate bodies 1 are used to fix a battery module formed by batteries including, but not limited to, lithium iron phosphate batteries. This arrangement can enhance the supporting strength of the middle of the end plate body 1, thereby reducing the risk of damage to the end plate body 1 and improving the compatibility of the end plate body 1.

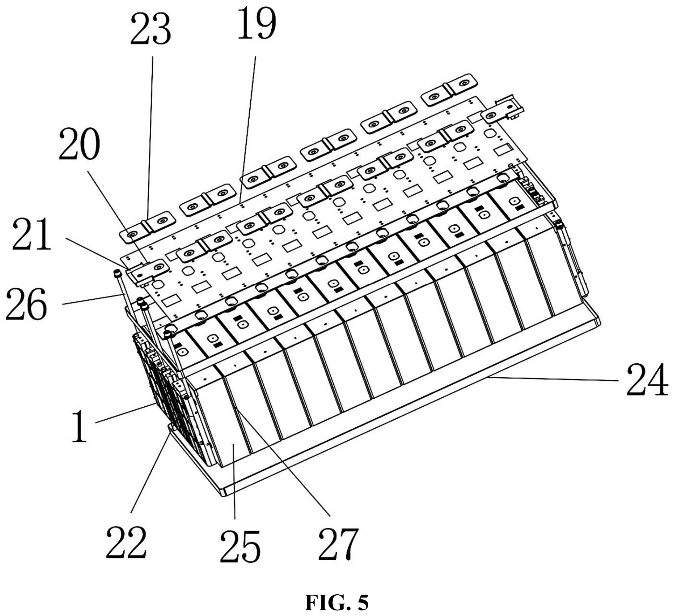

FIG. 5 is a structure view of a battery module according to the present application. In addition to the two end plate bodies 1, the battery module also includes a PC insulating sheet 19, a battery module aluminum busbar positive electrode 20, an end plate positioning block 21, an end plate insulating plate 22, a connecting busbar 23, an insulating steel strip 24, battery cells 25 (12 battery cells are used in FIG. 5 by way of example), studs 26, and silicone foam 27.

## Claims

1. An end plate for fixing a battery module, comprising an end plate body (1), wherein reinforcing structures are disposed on one side of the end plate body (1), the reinforcing structures comprise a plurality of reinforcing grooves (2) whose depth direction is a Z direction, and the plurality of reinforcing grooves (2) are arranged in an array along an X direction and a Y direction; fixing structures are disposed at two ends of the end plate body (1); and
at least one accommodation groove (3) is disposed along the Y direction in a middle of the end plate body (1) on the side where the reinforcing structures are located, coaxial through holes (4) are disposed on groove walls at two opposite ends of the at least one accommodation groove (3) along the Y direction, and the reinforcing structures are disposed on two sides of the at least one accommodation groove (3).

2. The end plate for fixing a battery module of claim 1, wherein the at least one accommodation groove (3) is provided with a plurality of U-shaped first reinforcing ribs (5) fixed on two side walls of the at least one accommodation groove (3) and the end plate body (1).

3. The end plate for fixing a battery module of claim 1, wherein a plurality of second reinforcing ribs (6) intersecting with each other are disposed in the reinforcing grooves (2) adjacent to the at least one accommodation groove (3), and for each second reinforcing rib (6), each end of the second reinforcing rib (6) is connected to an intersection between groove walls of a corresponding reinforcing groove (2).

4. The end plate for fixing a battery module of claim 1, wherein the through holes (4) on at least one side are threaded holes.

5. The end plate for fixing a battery module of claim 1, wherein along the Y direction, at least two reinforcing grooves (2) of the plurality of reinforcing grooves (2) are each provided with a third reinforcing rib (7), and the at least two reinforcing grooves (2) are symmetrically disposed on two sides of the at least one accommodation groove (3), and two third reinforcing ribs (7) form a T-shaped structure in the at least two reinforcing grooves (2).

6. The end plate for fixing a battery module of claim 5, wherein along the X direction, at least two reinforcing grooves (2) of the plurality of reinforcing grooves (2) are each provided with the third reinforcing rib (7).

7. The end plate for fixing a battery module of claim 5, further comprising a first notch (17), wherein the first notch (17) is disposed at one end of a corresponding through hole (4).

8. The end plate for fixing a battery module of claim 1, wherein the fixing structures comprise two first fixing holes (8) disposed on two sides of the end plate body (1) away from the at least one accommodation groove (3), each first fixing hole (8) penetrates the end plate body (1) along the Y direction, fracture grooves (9) are disposed on two sides of the end plate body (1), and each fracture groove (9) splits a corresponding first fixing hole (8) into two sections.

9. The end plate for fixing a battery module of claim 8, further comprising a second notch (18), wherein the second notch (18) is disposed at one end of a corresponding fixing hole (8).

10. The end plate for fixing a battery module of claim 1, further comprising a plurality of second fixing holes (10), wherein each second fixing hole (10) is disposed on a side wall of the end plate body (1) away from the at least one accommodation groove (3).

11. The end plate for fixing a battery module of claim 1, wherein limiting assemblies are disposed on two sides of the end plate body (1), and each limiting assembly is configured to limit a binding strap.

12. The end plate for fixing a battery module of claim 11, wherein the limiting assembly comprises two limiting protrusions or a limiting groove, the two limiting protrusions are provided on two sides of the end plate body away from the at least one accommodation groove and spaced apart along the Y direction.

13. The end plate for fixing a battery module of claim 12, wherein
the limiting protrusions (11) or the limiting groove are provided with inclined guide surfaces; and opposite surfaces of the two limiting protrusions (11) are configured as opposite inclined guide surfaces such that a limiting space for limiting the binding strap is formed between the two limiting protrusions (11); or
opposite groove walls of the limiting groove along the Y direction are the inclined guide surfaces, such that the limiting groove forms a limiting space for limiting the binding strap.

14. The end plate for fixing a battery module of claim 1, further comprising a fixing groove group, wherein
the fixing groove group is disposed on any side of an end of the at least one accommodation groove (3), and the fixing groove group is located on one side of the reinforcing structures;
the fixing groove group comprises at least one of a first fixing groove (12), a second fixing groove (13), or a third fixing groove (14); and
the first fixing groove (12) is configured to fix a cells contact system (CCS) assembly, the second fixing groove (13) is configured to fix an insulating block, and the third fixing groove (14) is configured to fix a wire harness.

15. The end plate for fixing a battery module of claim 14, wherein opposite inner walls of the second fixing groove (13) are provided with limiting guide grooves (16) configured to engage with protrusions provided on an insulating block.

16. The end plate for fixing a battery module of claim 14, wherein a wire passing hole (15) is disposed on a groove wall of the third fixing groove (14), and the wire passing hole (15) is configured such that an external wire harness can pass through the wire passing hole (15) and be gathered in the third fixing groove (14) to bind.

17. The end plate for fixing a battery module of any one of claims 1 to 16, wherein the end plate body (1) is made of aluminum.

18. A battery module, comprising the end plate for fixing a battery module of any one of claims 1 to 17, a PC insulating sheet, a battery module aluminum busbar positive electrode, an end plate positioning block, a connecting busbar, and a battery cell.
